(19) Europäisches Patentamt
European Patent Office
Office européen des brevets

(11) EP 0 532 395 B1

(12) **FASCICULE DE BREVET EUROPEEN**

(45) Date de publication et mention
de la délivrance du brevet:
**20.03.1996  Bulletin 1996/12**

(51) Int. Cl.$^6$: **B60L 3/10**

(21) Numéro de dépôt: **92402425.0**

(22) Date de dépôt: **04.09.1992**

(54) **Procédé et dispositif de commande de moteurs asynchrones en parallèle**

Verfahren und Vorrichtung zur Steuerung von Asynchronmotoren in Parallele

Method and device to control asynchronous motors in parallel

(84) Etats contractants désignés:
**AT BE CH DE ES FR GB IT LI NL SE**

(30) Priorité: **10.09.1991 FR 9111145**

(43) Date de publication de la demande:
**17.03.1993  Bulletin 1993/11**

(73) Titulaire: **GEC ALSTHOM SA**
**F-75116 Paris (FR)**

(72) Inventeur: **Sablayrolles, Jean Marie**
**F-69006 Lyon (FR)**

(74) Mandataire: **El Manouni, Josiane et al**
**SOSPI**
**14-16, rue de la Baume**
**F-75008 Paris (FR)**

(56) Documents cités:
**EP-A- 0 085 394        EP-A- 0 218 839**
**US-A- 4 327 313        US-A- 4 335 337**

• **PATENT ABSTRACTS OF JAPAN vol. 7, no. 92 (M-208)(1237) 16 Avril 1983 & JP-A-58 015 401**

## Description

La présente invention concerne la commande de moteurs asynchrones, et plus particulièrement la commande d'un ensemble de moteurs asynchrones montés en parallèle.

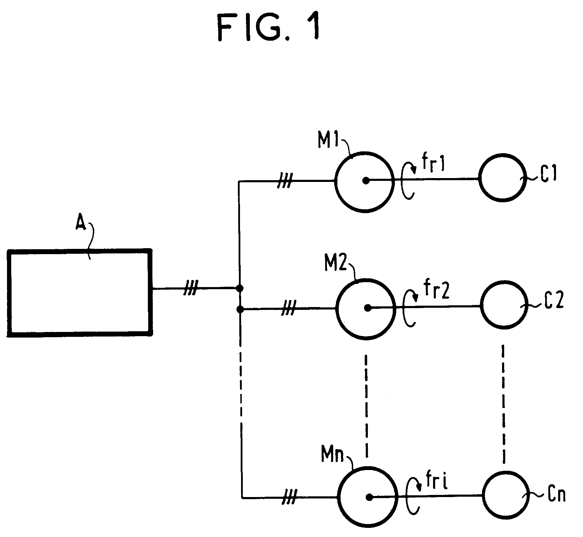

On entend par moteurs asynchrones montés en parallèle un ensemble de moteurs asynchrones M1,...Mn, identiques, ayant, comme indiqué sur la figure 1, une alimentation commune, A, et contribuant chacun à la réalisation d'une partie, théoriquement identique pour chacun de ces moteurs, d'un couple total recherché pour un ensemble de charges C1...Cn, théoriquement identiques, entraînées respectivement par chacun de ces moteurs.

Dans le cas où on utilise un seul moyen d'alimentation, tel qu'un onduleur direct de tension ou un onduleur de courant, pour alimenter plusieurs moteurs asynchrones en parallèle, on peut être confronté à des écarts de fréquence rotorique fr de ces moteurs, pour une même fréquence statorique d'alimentation fs fournie par cet onduleur, lorsque lesdites charges ne sont pas, en pratique, identiques.

Pour les applications ferroviaires par exemple, ce phénomène peut être provoqué par des écarts de diamètres de roues, ou par des pertes d'adhérence de roues (ou d'essieux ou de bogies, selon les applications).

La fréquence statorique de ces moteurs étant identique, et leur fréquence rotorique respective étant alors différente, le glissement est différent pour chacun de ces moteurs (on rappelle que le glissement g d'un moteur asynchrone est égal à $\frac{fs-fr}{fs}$). Par conséquent le couple délivré par chaque moteur est différent, et la consigne de couple total souhaité pour l'ensemble des moteurs n'est pas, en pratique, réalisée, notamment si l'on utilise, pour la commande de chacun de ces moteurs, une consigne de couple moyen (c'est-à-dire la consigne de couple total divisée par le nombre de moteurs).

Le document EP 0 085 394 décrit un procédé et un dispositif conformes aux caractéristiques figurant dans le préambule des revendications 1 et 5, respectivement.

La présente invention a pour but, dans ces conditions, la réalisation de ladite consigne de couple total.

La présente invention a pour objet un procédé de commande de moteurs asynchrones en parallèle, tel que défini dans la revendication 1.

La présente invention a également pour objet un dispositif pour la mise en oeuvre d'un tel procédé de commande.

D'autres objets et caractéristiques de la présente invention apparaîtront à la lecture de la description suivante d'un exemple de réalisation, faite en relation avec les dessins ci-annexés dans lesquels, outre la figure 1 relative à l'art antérieur et décrite ci-dessus,

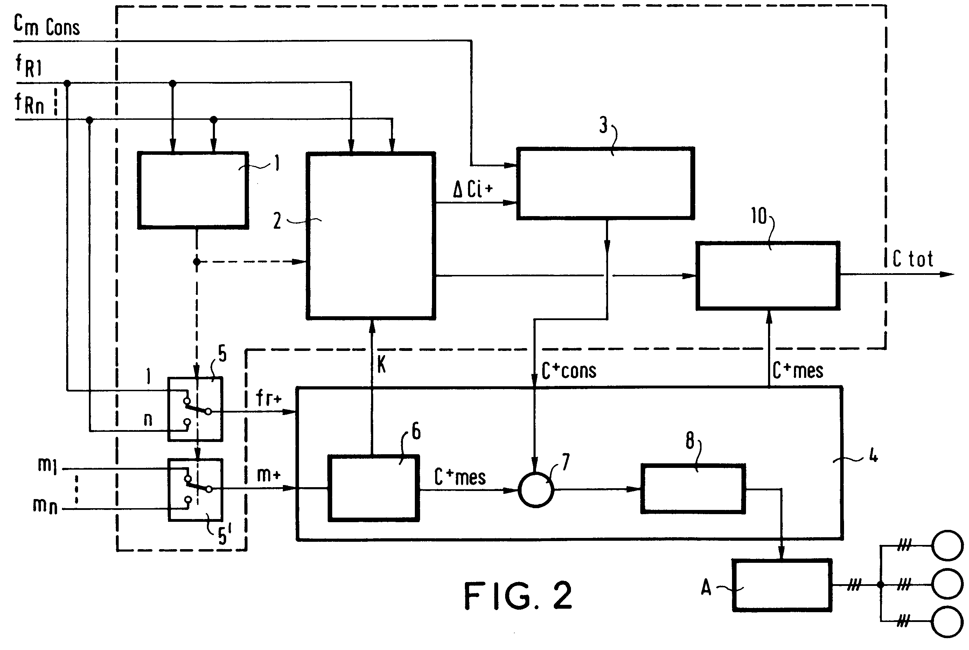

- la figure 2 est un schéma de principe d'un dispositif, suivant l'invention, de commande de moteurs asynchrones en parallèle.

L'invention est basée sur une commande de celui de ces moteurs montés en parallèle qui est le plus chargé, suivant les principes maintenant exposés.

On entend par moteur le plus chargé celui ayant le plus grand couple (en valeur absolue). Le moteur le plus chargé est ici déterminé comme étant celui ayant le plus grand glissement (en valeur absolue), c'est-à-dire celui dont la fréquence rotorique fr est la plus faible dans le cas de glissement positif (c'est-à-dire dans le cas de moteurs fonctionnant en traction) ou la plus grande dans le cas de glissement négatif (c'est-à-dire dans le cas de moteurs fonctionnant en freinage).

Soient :

| | |
|---|---|
| $n$ | : le nombre de moteurs, |
| $C_{Cons}$ | : la consigne de couple total à réaliser par l'ensemble des moteurs, |
| $C_{tot}$ | : le couple total effectivement réalisé par l'ensemble des moteurs, |
| $C_{mCons}$ | : la consigne de couple moyen à réaliser, égale à |

$$\frac{C_{Cons}}{n},$$

| | |
|---|---|
| $C_+$ | : le couple réalisé par le moteur le plus chargé, |
| $\Delta C_{i+}$ | : l'écart de couple entre un moteur Mi (i compris entre 1 et n) et le moteur le plus chargé, |
| $C_{+Cons}$ | : la consigne de couple à appliquer, suivant l'invention, au moteur le plus chargé, pour obtenir le couple total souhaité. |

On souhaite le respect du couple total, soit :

$$C_{tot} = C_{Cons}$$

soit encore :

$$C_{tot} = n.C_{mCons} \qquad (1)$$

Le couple total étant la somme des "n" couples moteurs, peut aussi s'écrire :

$$C_{tot} = \sum_1 (C_+ - \Delta C_{i+})$$

ou encore :

$$C_{tot} = nC_+ - \sum_1 \Delta C_{i+}) \qquad (2)$$

On déduit des relations (1) et (2), la relation donnant la consigne de couple $C_{+Cons}$ à appliquer au moteur le plus chargé pour respecter le couple total souhaité:

$$C_{+Cons} = C_{mCons} + \frac{\sum_i \Delta C_{i+}}{n} \qquad (3)$$

Connaissant la consigne de couple moyen à réaliser, il est alors nécessaire, pour déterminer la consigne de couple $C_{+Cons}$ appliquer au moteur le plus chargé, afin de respecter le couple total souhaité, de connaître les écarts de couple $\Delta C_{i+}$.

Ceux-ci peuvent être obtenus à partir des fréquences rotoriques mesurées de chacun de ces moteurs, par une relation du type :

$$\Delta C_{i+} = K (f_{ri} - f_{r+})$$

où $f_{r+}$ désigne la fréquence rotorique du moteur le plus chargé, et $f_{ri}$ la fréquence rotorique d'un moteur Mi autre que le moteur le plus chargé, et où K désigne un coefficient de proportionnalité reliant le couple C de chaque moteur à sa fréquence rotorique fr, soit

$$K = \frac{C}{f_r},$$

relation valable pour de faibles glissements, pour lesquels la caractéristique de couple C de ces moteurs en fonction de leur fréquence rotorique $f_r$ est linéaire autour de $f_s$ (fréquence statorique).

Ce coefficient K est utilisé dans toute commande de moteur par asservissement du couple de ce moteur à une valeur de consigne ; il sera en l'occurrence fourni par la commande réalisée, conformément à l'invention, de celui de ces moteurs qui est le plus chargé, par asservissement du couple de ce moteur à la valeur de consigne définie ci-dessus.

Le dispositif de commande de moteur suivant l'invention, représenté sur la figure 2 comporte ainsi :

- des moyens 1 de détermination du moteur le plus chargé, opérant à partir des fréquences rotoriques $f_{r1}...f_{rn}$ mesurées de chacun des moteurs, par simple détermination de la plus petite de ces fréquences pour les cas de fonctionnement en traction, ou de la plus grande de ces fréquences pour les cas de fonctionnement en freinage,
- des moyens 2 de calcul des écarts de couples $\Delta C_{i+}$, opérant à partir de ces fréquences rotoriques mesurées, de l'indication quant au moteur le plus chargé, fournie par les moyens 1, et du coefficient K défini ci-dessus, de façon à obtenir les écarts $\Delta C_{i+} = K(f_{ri} - f_{r+})$
- des moyens 3 de calcul de la consigne de couple $C_{+Cons}$ à appliquer au moteur le plus chargé, d'après la relation :

$$C_{+Cons} = C_{mCons} + \frac{\sum_i \Delta C_{i+}}{n}$$

ces moyens 3 opérant à partir des écarts de couple ainsi fournis par les moyens 2 et de la consigne extérieure $C_{mCons}$ de couple moyen a réaliser,
- des moyens 4 de commande du moteur le plus chargé, par asservissement du couple de ce moteur à la consigne $C_{+Cons}$ élaborée par les moyens 3, et comportant de façon classique :

  . des moyens 6 de calcul de couple réalisé par le moteur le plus chargé, opérant à partir de la fréquence rotorique $f_{r+}$ du moteur le plus chargé, sélectionnée parmi l'ensemble des fréquences rotoriques mesurées $f_{r1},...f_{rn}$, par un commutateur 5 commandé par les moyens 1 de détermination du moteur le plus chargé, et à partir de mesures nécessaires au calcul du couple (telles que courant de phase, tension entre phases, tension de spires de flux, etc...) ces mesures étant effectuées pour chacun des moteurs, et étant notées globalement $m_1...m_n$, et celles notées $m_+$ se rapportant au moteur le plus chargé étant sélectionnées par un commutateur 5' également commandé par les moyens 1, ces moyens 6 fournissant un couple dit couple mesuré, noté $C_{+mes}$, et fournissant en outre le coefficient K nécessaire au calcul des écarts de couple par les moyens de calcul 2,

- un détecteur 7 d'écart entre le couple mesuré $C_{+mes}$ fourni par les moyens de calcul 6 et la consigne $C_{+Cons}$ élaborée par les moyens de calcul 3,
- des moyens de régulation 8 opérant à partir du signal fourni par le détecteur d'écart 7, et élaborant, de façon classique, un ou plusieurs paramètres de commande de ce moteur, de façon à réduire cet écart, ce ou ces paramètres de commande étant appliqués à l'ensemble des moteurs par l'intermédiaire de leur moyen d'alimentation A.

Ce dispositif de commande comporte en outre avantageusement des moyens 10 de calcul du couple total $C_{tot}$ réalisé, suivant la relation :

$$C_{tot} = n \, C_{+mes} - \sum_i \Delta C_{i+},$$

ces moyens de calcul 10 opérant à partir du couple mesuré $C_{+mes}$ fourni par les moyens de calcul 6, et des écarts de couple issus des moyens de calcul 2.

Les différents moyens de calcul de ce dispositif peuvent être des moyens de calcul classiques qui ne nécessitent donc pas de description détaillée. Les autres moyens de ce dispositif tels que détecteur, moyen de régulation, commutateurs, peuvent également être des moyens classiques qui n'appellent pas de description particulière.

Une variante pour la détermination du moteur le plus chargé, en particulier pour les applications ferroviaires, consiste à se baser sur une mesure du diamètre des roues (faite à faible effort) tant que l'écart des fréquences rotoriques reste en deça d'un certain seuil, c'est-à-dire tant qu'il n'y a pas de perte d'adhérence.

Une variante pour l' élaboration de la consigne de couple à appliquer au moteur le plus chargé consiste à limiter en amplitude le terme correctif

$$\sum_i \frac{\Delta c_{i+}}{n}$$

de manière à respecter des contraintes de fonctionnement de ce moteur telles que :

- respect du dimensionnement thermique des moteurs,
- respect du couple instantané maximum du moteur (couple de décrochage,
- respect de sollicitations d'adhérence acceptables.

## Revendications

1. Procédé de commande de moteurs asynchrones en parallèle, en vue de la réalisation, par l'ensemble de ces moteurs, d'une consigne de couple dite consigne de couple total, par la commande de celui de ces moteurs qui est le plus chargé, caractérisé par l'asservissement du couple fourni par ce moteur à une valeur de consigne définie par addition, à la consigne de couple moyen, obtenue par division de ladite consigne de couple total par le nombre de moteurs, d'un terme correctif correspondant à la somme algébrique des écarts de couple de chacun de ces moteurs, par rapport au couple du moteur le plus chargé, divisée par le nombre de moteurs.

2. Procédé selon la revendication 1, caractérisé en ce que lesdits écarts de couple sont obtenus, pour chacun de ces moteurs, par multiplication de l'écart de fréquence rotorique de ce moteur par rapport à la fréquence rotorique du moteur le plus chargé, par un coefficient de proportionnalité K définissant la pente de la caractéristique de couple de ces moteurs en fonction de la fréquence rotorique, dans la zone de linéarité de celle-ci autour de la fréquence statorique.

3. Procédé selon l'une des revendications 1 et 2, caractérisé en ce que le moteur le plus chargé est déterminé comme étant celui dont la fréquence rotorique est la plus faible dans le cas de moteurs fonctionnant en traction, ou la plus grande dans le cas de moteurs fonctionnant en freinage.

4. Procédé selon l'une des revendications 1 à 3, caractérisé en ce que ledit terme correctif est limité en amplitude de manière à respecter des contraintes de fonctionnement du moteur le plus chargé.

5. Dispositif pour la mise en oeuvre du procédé selon l'une des revendications 1 à 4, comprenant :

- des moyens (1) de détermination du moteur le plus chargé, caractérisé par
- des moyens (2) de calcul des écarts de couple de chacun des moteurs par rapport ou moteur le plus chargé,
- des moyens (3) de calcul de ladite consigne de couple à appliquer au moteur le plus chargé,
- des moyens (4) d'asservissement de couple du moteur le plus chargé, à la consigne ainsi calculée.
- des moyens (6) de calcul de couple réalisé par le moteur le plus chargé,
- un détecteur (7) d'écart entre le couple mesuré fourni par les moyens (6) de calcul et la consigne élaborée par des moyens (3) de calcul, et
- des moyens (8) de régulation opérant à partir du signal fourni par le détecteur (7) d'écart,

6. Dispositif selon la revendication 5, caractérisé en ce que lesdits moyens (4) d'asservissement de couple du moteur le plus chargé opèrent à partir de la fréquence rotorique du moteur le plus chargé, sélectionnée, parmi les fréquences rotoriques mesurées de ces différents moteurs, par un commutateur (5) commandé par lesdits moyens (1) de détermination du moteur le plus chargé, et à partir d'un ensemble de mesures nécessaires au calcul du couple du moteur le plus chargé, sélectionnées parmi un ensemble de mesures effectuées pour ces différents moteurs, par un commutateur (5') commandé par lesdits moyens (1) de détermination du moteur le plus chargé.

7. Dispositif selon l'une des revendications 5 et 6, caractérisé en ce qu'il comporte en outre des moyens (10) de calcul du couple total réalisé, par soustraction, au produit du couple réalisé par le moteur le plus chargé, déterminé par lesdits moyens d'asservissement (4), par le nombre de moteurs, de la somme algébrique desdits écarts de couple.

## Claims

1. Method of controlling asynchronous motors in parallel so that all the motors produce a total torque set point by controlling the most heavily loaded motor, characterised in that the torque produced by this motor is slaved to a set point value defined by addition to the average torque set point obtained by dividing said total torque set point by the number of motors a corrective term corresponding to the algebraic sum of the torque differences of each of the motors relative to the torque of the most heavily loaded motor divided by the number of motors.

2. Method according to claim 1 characterised in that said torque differences are obtained for each motor by multiplying the rotor frequency difference of that motor relative to the rotor frequency of the most heavily loaded motor by a coefficient of proportionality K defining the slope of the torque characteristic of the motors as a function of the rotor frequency in the linear area thereof around the stator frequency.

3. Method according to claim 1 or claim 2 characterised in that the most heavily loaded motor is defined as that having the lowest rotor frequency in the case of motors operating in traction or the highest rotor frequency in the case of motors operating in braking.

4. Method according to any one of claims 1 to 3 characterised in that the amplitude of said corrective term is limited to comply with operating constraints on the most heavily loaded motor.

5. Device for implementing the method according to any one of claims 1 to 4 comprising:

- means (1) for determining the most heavily loaded motor, characterised by
- means (2) for calculating torque differences of each motor relative to the most heavily loaded motor,
- means (3) for calculating said torque set point to be applied to the most heavily loaded motor,
- means (4) for slaving the torque of the most heavily loaded motor to the set point thus calculated,
- means (6) for calculating the torque produced by the most heavily loaded motor,
- means (7) for detecting the difference between the torque measured by the calculation means (6) and the set point produced by the calculation means (3), and
- control means (8) operating on the basis of the signal supplied by the difference detector (7).

6. Device according to claim 5 characterised in that said means (4) for slaving the torque of the most heavily loaded motor operate on the basis of the rotor frequency of the most heavily loaded motor selected from the measured rotor frequencies of the various motors by a switch (5) controlled by said means (1) for determining the most heavily loaded motor and from a set of measurements necessary for calculating the torque of the most heavily loaded motor selected from a set of measurements for the various motors by a switch (5') controlled by said means (1) for determining the most heavily loaded motor.

7. Device according to claim 5 or claim 6 characterised in that it further includes means (10) for calculating the total torque produced by subtracting from the product of the torque produced by the most heavily loaded motor determined by said slaving means (4) by the number of motors the algebraic sum of said torque differences.

**Patentansprüche**

1. Verfahren zur Steuerung von parallelgeschalteten Motoren, um mit der Gesamtheit dieser Motoren ein Gesamt-Solldrehmoment durch Steuerung des am meisten belasteten Motors zu erreichen, gekennzeichnet durch die Nachregelung des von diesem Motor gelieferten Drehmoments auf einen Sollwert, der durch Addition einer Korrekturgröße entsprechend der algebraischen Summe der Drehmomentabweichungen jedes dieser Motoren bezüglich des am meisten belasteten Motors geteilt durch die Anzahl der Motoren zum mittleren Drehmoment-Sollwert, der durch Division des Gesamt-Solldrehmoments durch die Anzahl der Motoren erhalten wird.

2. Verfahren nach Anspruch 1, dadurch gekennzeichnet, daß die Drehmomentabweichungen für jeden dieser Motoren durch Multiplizieren des Abstands der Rotorfrequenz dieses Motors bezüglich der Rotorfrequenz des am meisten belasteten Motors mit einem Proportionalitätsfaktor K erhalten wird, der die Steigung der Drehmomentkennlinie dieses Motors abhängig von der Rotorfrequenz in der linearen Zone dieser Kennlinie um die Statorfrequenz herum definiert.

3. Verfahren nach einem der Ansprüche 1 und 2, dadurch gekennzeichnet, daß der am meisten belastete Motor als derjenige bestimmt wird, dessen Rotorfrequenz im Motorbetrieb am kleinsten oder im Bremsbetrieb am größten ist.

4. Verfahren nach einem der Ansprüche 1 bis 3, dadurch gekennzeichnet, daß die Korrekturgröße amplitudenmäßig so begrenzt wird, daß Betriebserfordernisse des am meisten belasteten Motors respektiert werden.

5. Vorrichtung zur Durchführung des Verfahrens nach einem der Ansprüche 1 bis 4,

- mit Mitteln (1) zur Bestimmung des am meisten belasteten Motors, gekennzeichnet
- durch Mittel (2) zur Berechnung der Drehmomentunterschiede jedes der Motoren bezüglich des am meisten belasteten Motors,
- durch Mittel (3) zur Berechnung des an dem am meisten belasteten Motor zu realisierenden Solldrehmoments,
- durch Mittel (4) zur Nachregelung des Drehmoments des am meisten belasteten Motors gemäß dem so berechneten Sollwert,

- durch Mittel (6) zur Berechnung des an dem am meisten belasteten Motor realisierten Drehmoments,

- durch einen Detektor (7) zur Erfassung des Abstands des von den Rechenmitteln (6) gelieferten Drehmoments von dem von den Rechenmitteln (3) ermittelten Sollwert,

- und durch Regelungsmittel (8), die auf das vom Detektor (7) gelieferte Signal ansprechen.

6. Vorrichtung nach Anspruch 5, dadurch gekennzeichnet, daß die Mittel (4) zur Nachregelung des Drehmoments des am meisten belasteten Motors auf die Rotorfrequenz des am meisten belasteten Motors, die unter den Rotorfrequenzen der verschiedenen Motoren von einem durch die Mittel (1) zur Bestimmung des am meisten belasteten Motors gesteuerten Schalter (5) ausgewählt wird, und auf eine Gruppe von Meßwerten ansprechen, die für die Berechnung des Drehmoments des am meisten belasteten Motors erforderlich sind und aus einer Gruppe von für die verschiedenen Motoren erhaltenen Meßwerten von einem Schalter (5') ausgewählt werden, der ebenfalls von den Mitteln (1) zur Bestimmung des am meisten belasteten Motors gesteuert wird.

7. Vorrichtung nach einem der Ansprüche 5 und 6, dadurch gekennzeichnet, daß sie weiter Mittel (10) zur Berechnung des Gesamtdrehmoments besitzt, wobei diese Berechnung durch Subtraktion der algebraischen Summe der Drehmomentunterschiede vom Produkt aus dem von den Regelmitteln (4) bestimmten Drehmoments des am meisten belasteten Motors mit der Anzahl von Motoren bestimmt wird.

# FIG. 1

FIG. 2

EP 0 532 395 B1